# EUROPÄISCHE PATENTSCHRIFT

(11) **EP 3 116 765 B1**
(45) Veröffentlichungstag und Bekanntmachung des Hinweises auf die Patenterteilung: **18.07.2018**
(21) Anmeldenummer: 15708732.1
(22) Anmeldetag: 07.03.2015
(51) Int. Cl.: B62D 25/16, B62D 29/00, B62D 35/00

(54) **VERKLEIDUNGSELEMENT FÜR EIN KRAFTFAHRZEUG**
FAIRING ELEMENT FOR A MOTOR VEHICLE
ÉLÉMENT D'HABILLAGE POUR UN VÉHICULE AUTOMOBILE

(30) Priorität: 10.03.2014 DE 202014101058 U
(43) Veröffentlichungstag der Anmeldung: 18.01.2017
(73) Patentinhaber: REHAU AG + Co, 95111 Rehau (DE)
(72) Erfinder: VOGEL, Matthias, 95233 Helmbrechts (DE); PREISSINGER, Christian, 95615 Marktredwitz (DE)
(86) Internationale Anmeldenummer: PCT/EP2015/000519
(87) Internationale Veröffentlichungsnummer: WO 2015/135640

(56) Entgegenhaltungen:
- EP-A1- 1 251 285
- DE-A1- 19 736 755
- FR-A1- 2 761 651
- US-A1- 2008 067 837

## Beschreibung

Die Erfindung betrifft ein Verkleidungselement für ein Kraftfahrzeug mit
- einem flächigen Korpus aus Kunststoff und
- mindestens einem an den Korpus, vorzugsweise einstückig, angeformten Rastelement zur Herstellung einer Rastverbindung des Korpus mit einem Außenanbauteil des Kraftfahrzeugs,
wobei das Rastelement vom flächigen Korpus weg gerichtet ist. Derartige Verkleidungselemente für Kraftfahrzeuge sind im Stand der Technik bekannt. Sie kommen insbesondere als aerodynamische Abweiser (sog. Aero-Ecken-Deckel) zum Einsatz, welche an den äußeren beiden Rändern von Heckspoilern häufig vorgesehen werden. Solche aerodynamischen Abweise können beispielsweise der EP 2 464 542 B1 entnommen werden.

Die im Stand der Technik zum Einsatz kommenden Rastelemente weisen für einige Anwendungen lediglich unzureichende Clipkräfte im Belastungsfall (mechanisch und / oder thermisch) auf. Insbesondere unter Wärmeeinwirkung können sich die Rastelemente verformen, wodurch der Formschluss reduziert bzw. aufgehoben wird. Auch eine zu starke mechanische Belastung kann zu einem unerwünschten Ausclipsen führen.

Ein Verkleidungselement mit den Merkmalen des Oberbegriffs des Patentanspruchs 1 ist aus der US 2008/067837 A1 bekannt.

Der Erfindung liegt die Aufgabe zugrunde, ein Verkleidungselement mit den Merkmalen des Oberbegriffs des Patentanspruchs 1 anzugeben, welches eine verbesserte Verrastung des Verkleidungselementes am entsprechenden Außenanbauteil des Kraftfahrzeugs gewährleistet.

Erfindungsgemäß wird die Aufgabe durch die Merkmale des Patentanspruchs 1 gelöst. Erfindungsgemäß kommt also ein Clip mit zusätzlicher seitlicher Rastfunktion zum Einsatz, die durch eine zusätzliche seitliche Rastnase realisiert wird. Hierdurch wird ein Aufrechterhalten des bei der Rastverbindung entstehenden Formschlusses auch bei einer Verformung des Rastelementes sowie eine erhöhte Widerstandskraft gegenüber mechanischer Belastung gewährleistet. Bei einer Verformung der Rastverbindung durch Wärmeeinwirkung ist durch die zusätzliche seitliche Rastfunktion ebenfalls sicher gewährleistet, dass es nicht zu einem unerwünschten Ausclipsen kommt. Erfindungsgemäß hinterhakt neben dem üblichen Clipverhalten des Rastelementes das zusätzliche Seitenrastelement an einem seitlichen Lager des Außenanbauteils des Kraftfahrzeuges. Sofern nun erhöhte mechanische Belastungen auftreten oder der durch die übliche Clipfunktion erzeugte Formschluss durch Verformung des Rastelements aufgehoben wird, bleibt der Formschluss durch die Hinterhakung der seitlichen Seitenrastelemente weiterhin erhalten. Insgesamt ergibt sich durch die erfindungsgemäße Lehre somit eine deutlich erhöhte Sicherheit der Rastverbindung gegen ein unerwünschtes Ausclipsen.

Zweckmäßigerweise ist die Rastfläche des Seitenrastelementes zumindest im Wesentlichen parallel, vorzugsweise parallel, zum benachbarten Außenrand des Korpus ausgerichtet. Im Rahmen der Erfindung liegt es insbesondere, dass die Seitenfläche des Seitenrastelementes den benachbarten Außenrand des Korpus zugewandt ist. Die Rastfläche des Seitenrastelementes kann deutlich kleiner als die Rastfläche des Rastelementes sein. Zweckmäßigerweise bilden das Rastelement sowie das daran angeformte Seitenrastelement gemeinsam eine hakenförmige Geometrie. Das Verkleidungselement ist zweckmäßigerweise insgesamt als, vorzugsweise einstückiges, Kunststoff-Spritzgussteil ausgebildet.

Bei der Montage des erfindungsgemäßen Verkleidungselementes am Außenanbauteil wird neben der primären Einrastrichtung, welche zu einem Einrasten des Rastelementes führt, zusätzlich eine seitliche Rastbewegung vollzogen, welche das erfindungsgemäße Hinterhaken des Seitenrastelementes am entsprechenden Gegenlager am Außenanbauteil ermöglicht.

Erfindungsgemäß ist an den Korpus mindestens ein weiteres, dem Rastelement benachbartes zweites Rastelement angeformt ist. Das zweite Rastelement ist jedoch ohne Seitenrastelement ausgebildet.

Das erfindungsgemäße Verkleidungselement findet insbesondere Einsatz bei Kraftfahrzeug-Heckspoilern. So kann insbesondere der Korpus des Verkleidungselementes als dreieckförmige Teilabdeckung für einen Spoiler, vorzugsweise einen Heckspoiler, ausgebildet sein, wobei diese Teilabdeckung insbesondere zur Verbesserung des aerodynamischen Verhaltens des Heckspoilers dienen kann.

Gegenstand der Erfindung ist auch eine Kraftfahrzeugkomponente mit einem Außenanbauteil und einem erfindungsgemäßen Verkleidungselement. Wie bereits erläutert, ist dieses Außenanbauteil zweckmäßigerweise als Spoiler, vorzugsweise als Heckspoiler, ausgebildet.

Im Rahmen der Erfindung liegt es, dass die Anschlussgeometrie des Außenanbauteils für Rastelement und Seitenrastelement einerseits sowie die Gestalt des Rastelements und des Seitenrastelements andererseits so aufeinander abgestimmt sind, dass der Korpus nach dem Einrastvorgang unlösbar mit dem Außenanbauteil verbunden, also verrastet ist. In diesem Fall wird durch die zusätzliche seitliche Rastfunktion auch eine Diebstahlsicherung gewährleistet.

Im Folgenden wird die Erfindung anhand einer lediglich ein Ausführungsbeispiel darstellenden Zeichnung ausführlich erläutert. Es zeigen schematisch:
- Fig. 1: eine ausschnittsweise, dreidimensionale Darstellung eines Kraftfahrzeuges schräg von hinten mit einem Heckspoiler, an dem ein erfindungsgemäßes Verkleidungselement montiert ist,
- Fig. 2: ein erfindungsgemäßes Verkleidungselement im Montagezustand,
- Fig. 3: eine Außenansicht eines nicht erfindungsgemäßen Verkleidungselementes,
- Fig. 3a: den Ausschnitt A in Fig. 3 in vergrößerter Darstellung und
- Fig. 4a bis 4c: diverse Ansichten des in der Fig. 3 dargestellten Verkleidungselementes.

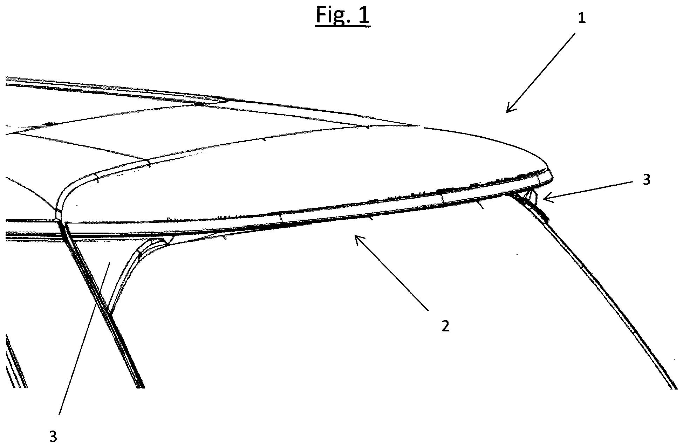

Die Fig. 1 zeigt eine Kraftfahrzeugkomponente eines Kraftfahrzeuges 1 mit einem Außenanbauteil 2, an dessen beiden Enden jeweils ein erfindungsgemäßes Verkleidungselement 3 montiert ist. Im Ausführungsbeispiel ist die Kraftfahrzeugkomponente 2 als Heckspoiler ausgebildet, der am oberen Rand einer Heckklappe des Kraftfahrzeugs 1 befestigt ist. Die Heckklappe ist mit einer Heckscheibe versehen. Die Verkleidungselemente 3 dienen als aerodynamische Abweiser, welche das aerodynamische Verhalten des gesamten Heckspoilers 2 verbessern.

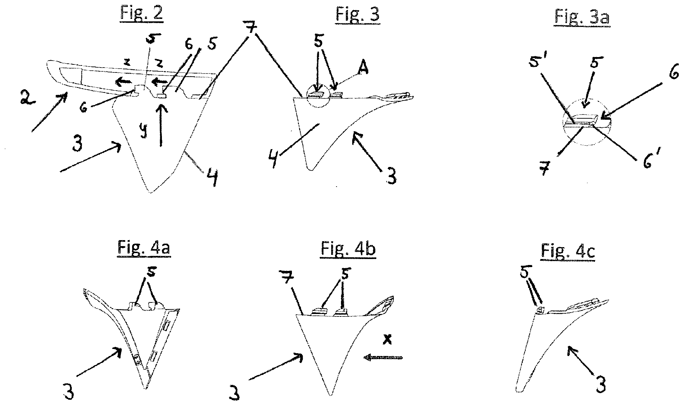

Die Fig. 3 bzw. 3a zeigen ein nicht zur Erfindung gehörendes Verkleidungselement 3 in einer Detaildarstellung. Der Fig. 3 kann entnommen werden, dass das Verkleidungselement 3 einen flächigen Korpus 4 aus Kunststoff sowie die zwei an den Korpus 4 einstückig angeformte Rastelemente 5 zur Herstellung einer Rastverbindung des Korpus 4 mit dem Heckspoiler 2 aufweist. Die beiden Rastelemente 5 sind vom flächigen Korpus 4 weggerichtet. Insbesondere der Detailansicht Fig. 3a kann entnommen werden, dass an die beiden Rastelemente 5 jeweils ein zusätzliches Seitenrastelement 6 einstückig angeformt ist, welches ein zusätzliches seitliches Einrasten des jeweiligen Rastelementes 5 am Heckspoiler 2 ermöglicht.

Das in den Figuren 3 bzw. 3a dargestellte Verkleidungselement 3 ist in der Fig. 2 im am Heckspoiler 2 montierten Zustand schematisch von innen, also vom Fahrzeug 1 aus gesehen, dargestellt. Man erkennt anhand einer vergleichenden Betrachtung mit Fig. 3a, dass die Rastfläche 6' der beiden Seitenrastelemente 6 jeweils parallel zum benachbarten Außenrand 7 des Korpus 4 ausgerichtet ist. Ferner sind die Rastflächen 6' der Seitenrastelemente 6 dem benachbarten Außenrand 7 des Korpus 4 zugewandt. Die Rastfläche 6' der Seitenrastelemente 6 ist, wie einer vergleichenden Betrachtung der Figuren 2, 3 und 3a zu entnehmen ist, deutlich kleiner als die Rastfläche 5' der Rastelemente 5. Die Fig. 2 zeigt deutlich, dass das Rastelement 5 sowie das daran angeformte Seitenrastelement 6 jeweils gemeinsam eine hakenförmige Geometrie bilden. Die in der Fig. 2 dargestellten Pfeile y, z zeigen ferner, dass es bei der Montage des Verkleidungselementes 3 eine Hauptmontagerichtung y gibt, welche in der Fig. 2 nach oben zeigt und ein Einrasten der beiden Rastelemente 5 zufolge hat. Dieser Hauptmontagebewegung wird eine seitliche Montagebewegung in z-Richtung überlagert, welche ein Einrasten der beiden zusätzlichen Seitenrastelemente 6 ermöglicht. Im montierten Zustand bildet der Korpus 4 eine dreieckförmige Teilabdeckung für den Heckspoiler 2 und verbessert so dessen aerodynamisches Verhalten.

Im Ausführungsbeispiel sind die Anschlussgeometrie des Heckspoilers 2 für die Rastelemente 5 und Seitenrastelemente 6 einerseits sowie die Gestalt der Rastelemente 5 und der Seitenrastelemente 6 andererseits so aufeinander abgestimmt, dass der Korpus 4 nach dem Einrastvorgang unlösbar mit dem Heckspoiler 2 verbunden ist. Hierdurch wird u.a. eine Diebstahlsicherung erzielt.

Die Figuren 4a bis 4c zeigen das in der Fig. 3 dargestellte Verkleidungselement 3 in unterschiedlichen Ansichten. Während Fig. 4a das Verkleidungselement 3 vom Fahrzeug 1 aus gesehen, also in Analogie zur Fig. 2 die Innenseite des Verkleidungselements 3 zeigt, ist in der Fig. 4b eine dreidimensionale Außenansicht dargestellt. Die Fig. 4c zeigt die Ansicht X in Fig. 4b.

## Patentansprüche

1. Verkleidungselement (3) für ein Kraftfahrzeug (1) mit
- einem flächigen Korpus (4) aus Kunststoff und
- mindestens einem an den Korpus (4), vorzugsweise einstückig, angeformten Rastelement (5) zur Herstellung einer Rastverbindung des Korpus (4) mit einem Außenanbauteil (2) des Kraftfahrzeugs,
wobei das Rastelement (5) vom flächigen Korpus (4) weg gerichtet ist, und wobei an das Rastelement (5) ein zusätzliches Seitenrastelement (6), vorzugsweise einstückig, angeformt ist, das ein zusätzliches seitliches Einrasten der Rastelementes (5) am Außenanbauteil (2) ermöglicht, **dadurch gekennzeichnet, dass** an den Korpus (4) mindestens ein weiteres, dem Rastelement (5) benachbartes zweites Rastelement (5) angeformt ist, und dass das zweite Rastelement (5) ohne Seitenrastelement ausgebildet ist.

2. Verkleidungselement nach Anspruch 1, **dadurch gekennzeichnet, dass** die Rastfläche (6') des Seitenrastelementes (6) zumindest im Wesentlichen parallel zum benachbarten Außenrand (7) des Korpus (4) ausgerichtet ist.

3. Verkleidungselement nach Anspruch 1 oder 2, **dadurch gekennzeichnet, dass** die Rastfläche (6') des Seitenrastelementes (6) dem benachbarten Außenrand (7) des Korpus (4) zugewandt ist.

4. Verkleidungselement nach einem der Ansprüche 1 bis 3, **dadurch gekennzeichnet, dass** die Rastfläche (6') des Seitenrastelementes (6) deutlich kleiner als die Rastfläche (5') der Rastelementes (5) ist.

5. Verkleidungselement nach einem der Ansprüche 1 bis 4, **dadurch gekennzeichnet, dass** das Rastelement (5) sowie das daran angeformte Seitenrastelement (6) in der Korpusebene gemeinsam eine hakenförmige Geometrie bilden.

6. Verkleidungselement nach einem der Ansprüche 1 bis 5, **dadurch gekennzeichnet, dass** der Korpus (4) als dreiecksförmige Teilabdeckung für einen Spoiler, vorzugsweise einen Heckspoiler (2), ausgebildet ist.

7. Kraftfahrzeugkomponente mit
- einem Außenanbauteil (2) und
- einem Verkleidungselement (3) nach einem der Ansprüche 1 bis 6.

8. Kraftfahrzeugkomponente nach Anspruch 7, **dadurch gekennzeichnet, dass** das Außenanbauteil (2) als Spoiler, vorzugsweise als Heckspoiler, ausgebildet ist.

9. Kraftfahrzeugkomponente nach Anspruch 7 oder 8, **dadurch gekennzeichnet, dass** die Anschlussgeometrie des Außenanbauteils (2) für Rastelement (5) und Seitenrastelement (6) einerseits sowie die Gestalt des Rastelementes (5) und des Seitenrastelements (6) andererseits so aufeinander abgestimmt sind, dass der Korpus (4) nach dem Einrastvorgang unlösbar mit dem Außenanbauteil (2) verbunden ist.

## Claims

1. A cladding element (3) for a motor vehicle (1) having
- a planar body (4) made of plastic and
- at least one latching element (5) moulded on to the body (4), preferably integrally, for producing a latching connection of the body (4) with an external attachment (2) of the motor vehicle,
wherein the latching element (5) is directed away from the planar body (4), and wherein an additional side latching element (6) is moulded on to the latching element (5), preferably integrally, which allows an additional lateral latching of the latching element (5) on the external attachment (2),
**characterised in that** at least one further, second latching element (5) adjacent to the latching element (5) is moulded on to the body (4) and **in that** the second latching element (5) is formed without a side latching element.

2. The cladding element according to claim 1, **characterised in that** the latching surface (6') of the side latching element (6) is aligned at least substantially parallel to the adjacent outer edge (7) of the body (4).

3. The cladding element according to claim 1 or 2, **characterised in that** the latching surface (6') of the side latching element (6) faces towards the adjacent outer edge (7) of the body (4).

4. The cladding element according to one of claims 1 to 3, **characterised in that** the latching surface (6') of the side latching element (6) is significantly smaller than the latching surface (5') of the latching element (5).

5. The cladding element according to one of claims 1 to 4, **characterised in that** the latching element (5) and the side latching element (6) moulded thereon jointly form a hook-shaped geometry in the plane of the body.

6. The cladding element according to one of claims 1 to 5, **characterised in that** the body (4) is in the form of a triangular partial cover for a spoiler, preferably a rear spoiler (2).

7. A motor vehicle component having
- an external attachment (2) and
- a cladding element (3) according to one of claims 1 to 6.

8. The motor vehicle component according to claim 7, **characterised in that** the external attachment (2) is in the form of a spoiler, preferably a rear spoiler.

9. The motor vehicle component according to claim 7 or 8, **characterised in that** the connection geometry of the external attachment (2) for latching element (5) and side latching element (6) on the one hand and the shape of the latching element (5) and the side latching element (6) on the other hand are matched to one another in such a way that the body (4) is inseparably connected to the external attachment (2) after the latching operation.

## Revendications

1. Élément d'habillage (3) pour un véhicule automobile (1), comprenant
- un corps (4) plan en matière plastique et
- au moins un élément d'encliquetage (5) formé, de préférence d'une seule pièce, sur le corps (4), destiné à la fabrication d'une liaison d'encliquetage du corps (4) avec une pièce de montage extérieure (2) du véhicule automobile,
l'élément d'encliquetage (5) étant orienté de manière détournée du corps (4) plan, et un élément supplémentaire d'encliquetage latéral (6) étant formé, de préférence d'une seule pièce, sur l'élément d'encliquetage (5), lequel permet un encliquetage latéral supplémentaire de l'élément d'encliquetage (5) sur la pièce de montage extérieure (2), **caractérisé en ce qu'**au moins un deuxième élément d'encliquetage (5) supplémentaire, adjacent à l'élément d'encliquetage (5) est formé sur le corps (4), et **en ce que** le deuxième élément (5) est réalisé sans élément d'encliquetage latéral.

2. Élément d'habillage selon la revendication 1, **caractérisé en ce que** la surface d'encliquetage (6') de l'élément d'encliquetage latéral (6) est orientée au moins essentiellement parallèlement au bord extérieur (7) adjacent du corps (4).

3. Élément d'habillage selon la revendication 1 ou 2, **caractérisé en ce que** la surface d'encliquetage (6') de l'élément d'encliquetage latéral (6) est tournée vers le bord extérieur (7) adjacent du corps (4).

4. Élément d'habillage selon l'une quelconque des revendications 1 à 3, **caractérisé en ce que** la surface d'encliquetage (6') de l'élément d'encliquetage latéral (6) est nettement plus petite que la surface d'encliquetage (5') de l'élément d'encliquetage (5).

5. Élément d'habillage selon l'une quelconque des revendications 1 à 4, **caractérisé en ce que** l'élément d'encliquetage (5) ainsi que l'élément d'encliquetage latéral (6) qui y est formé forment ensemble une géométrie en forme de crochet dans le plan du corps.

6. Élément d'habillage selon l'une quelconque des revendications 1 à 5, **caractérisé en ce que** le corps (4) est réalisé comme recouvrement partiel triangulaire pour un aileron, de préférence un aileron arrière (2).

7. Composant de véhicule automobile comprenant
- une pièce de montage extérieure (2) et
- un élément d'habillage (3) selon l'une quelconque des revendications 1 à 6.

8. Composant de véhicule automobile selon la revendication 7, **caractérisé en ce que** la pièce de montage extérieure (2) est réalisée comme aileron, de préférence comme aileron arrière.

9. Composant de véhicule automobile selon la revendication 7 ou 8, **caractérisé en ce que** la géométrie de raccordement de la pièce de montage extérieure (2) pour l'élément d'encliquetage (5) et l'élément d'encliquetage latéral (6), d'une part, ainsi que la forme de l'élément d'encliquetage (5) et de l'élément d'encliquetage latéral (6), d'autre part, sont adaptées l'une à l'autre de manière à ce que le corps (4), après l'opération d'encliquetage, soit relié à la pièce de montage extérieure (2) de manière inamovible.
